# EUROPEAN PATENT APPLICATION

(11) **EP 2 364 009 A2**
(43) Date of publication of application: **07.09.2011**
(21) Application number: 11150889.1
(22) Date of filing: 13.01.2011
(51) Int. Cl.: H04N 1/00

(54) **Control point, image forming apparatus, and method for sending fax data using fax data transmission function of the image forming apparatus**

(30) Priority: 08.02.2010 KR 20100011494
(71) Applicant: Samsung Electronics Co., Ltd., Gyeonggi-do (KR)
(72) Inventor: Seo, Young-sang, Seoul (KR); Lim, Yeon-jung, Seoul (KR); Oh, Yu-na, Seoul (KR)
(74) Representative: Bruce, Alexander Richard Henry

(57) **Abstract**

An image forming apparatus is provided. The image forming apparatus is requested by a connectable control point to execute a fax job, and includes a communication interface which is requested by a connectable control point to execute a fax job, and receives content corresponding to the fax job; a TTI generation unit which generates a terminal identification (TTI) corresponding to the fax job; an image processor which generates a fax image using the generated TTI and the received content; and a fax unit which transmits the generated fax image.

## Description

The present invention relates to an image forming apparatus, a control point, and a method for sending data by using a fax data transmission function of the image forming apparatus, and more particularly, to a control point which sends data to an image forming apparatus having the fax data transmission function using the digital living network alliance (DLNA) standard to send a fax data, an image forming apparatus and a method for sending a fax image.

Usually, an image forming apparatus includes a device which prints print data generated by a terminal, such as a computer, on a printing medium. Such an image forming apparatus may be a copy machine, a printer, a fax machine, or an MFP (multifunction peripheral) which integrates functions of these in one device.

Since image forming apparatuses which have been recently introduced support the DLNA standard, the image forming apparatuses receive a printing job not only through a terminal, such as a computer, but also through various control points.

The DLNA is an organization of standardization of digital information technology founded to set the standards for compatibility of data such as music, photographic, motion pictures, and so on. The DLNA aims at establishing compatible platforms based on open standards and realizing convergence among services. The DLNA promotes introduction of the guidelines based on UPnP (Universal Plug and Play) which is widely used on many devices such as an appliance, a personal computer, a wireless communication device, and so on.

A user may use various content on a DLNA network using a control point, and output the content through an image forming apparatus connected to the DLNA network.

However, in a related art, there is merely a protocol for controlling DLNA between a control point and an image forming apparatus which supports a printing operation and a scanning operation. A method for controlling a fax function of an image forming apparatus by a control point does not exist.

Accordingly, a user needs to send an image stored in a control point, such as a mobile phone, to an image forming apparatus or a host device by fax in order to fax the image, which causes inconvenience to the user. That is, a user has to go through two or more processes to use fax to send an image stored in a mobile phone.

Moreover, even if a user sends a document using a fax machine or an image forming apparatus for public use, a recipient device receives only the document including transmit terminal identification (TTI) which contains information on the corresponding fax machine or image forming apparatus, therefore it is hard to recognize which user sends the document.

Thus, a method which enables a control point to control a fax function of an image forming apparatus, and a method for inserting user information into TTI in the process of sending data by fax are required.

An embodiment provides a control point which transmits data by fax by sending data to an image forming apparatus having a fax function using DLNA, an image forming apparatus, and a method for sending a fax thereof.

An embodiment also provides a control point which adds user information to TTI and then transmits the data using data transmission function of fax, an image forming apparatus, and a method for sending a fax data.

According to an exemplary aspect, there is provided an image forming apparatus which is capable of being connected to a control point using a digital living network alliance (DLNA) methodology, the image forming apparatus including a communication interface which is requested by a connectable control point to execute a fax job, and receives content corresponding to the fax job; a TTI generation unit which generates a terminal identification (TTI) corresponding to the fax job; an image processor which generates a fax image (data) from the generated TTI and the received content; and a fax unit which transmits the generated fax image (data) by fax.

The image forming apparatus may further include a DLNA stack unit which, if the control point requests the DLNA stack unit to execute a fax job, transmits information regarding an address to which the content corresponding to the fax job is transmitted to the control point.

The DLNA stack unit, if the address having the content is included in the request for executing the fax job, may control the communication interface to receive the content corresponding to the fax job from the address having the content.

The TTI generation unit, if information regarding a user is included in the request for executing the fax job, may generate TTI using the user information.

The user information may include at least one of a user's name, a telephone number, and a message.

The communication interface may receive a fax option relating to the fax job from the control point, and the image processing unit may generate a fax image based on the received fax option.

The fax unit may generate information on an event relating to a progress of a fax job, and the communication interface may transmit the generated information to the control point.

According to another exemplary aspect, there is provided a control point which is capable of being connected to an image forming apparatus using a digital living network alliance (DLNA) methodology, the control point including a communication interface which searches for image forming apparatus capable of being connected to each other using a DLNA; a user interface which receives a selection of an image forming apparatus to execute a fax job from among the searched image forming apparatus and a selection of content to be transmitted to the selected image forming apparatus; and a DLNA stack unit which controls the communication interface to transmit the selected content to the selected image forming apparatus.

The control point may further include a storage unit which stores at least one of a user's name, a telephone number, and a message as user information, wherein the DLNA stack unit may transmit the selected content and user information to the selected image forming apparatus.

The DLNA stack unit may control the communication interface to request the selected image forming apparatus to execute a fax job, and if information regarding an address to which the content is transmitted in response to the request for executing the fax job is received, transmit the selected data based on the information regarding the address.

The DLNA stack unit may incorporate the user information into the request for executing the fax job, and request the selected image forming apparatus to execute the fax job.

The communication interface may receive information regarding a progress of the fax job from the selected image forming apparatus, and the user interface may display the received information.

According to another exemplary aspect, there is provided a method that an image forming apparatus capable of being connected to a control point transmits data by fax using a transmission function of the image forming apparatus using a digital living network alliance (DLNA) methodology, the method including receiving a request for executing a fax job from a connectable control point; receiving content corresponding to the fax job; generating a transmit terminal identification (TTI) corresponding to the fax job; generating a fax image from the generated TTI and the received content; and transmitting the generated fax data (image).

The method may further include transmitting, if the control point requests for an execution of a fax job, information regarding an address to which the content corresponding to the fax job is transmitted to the control point.

The receiving, if the address having the content is included in the request for executing the fax job, may receive the content corresponding to the fax job from the address having the content.

The generating the TTI, if information regarding a user is included in the request for executing the fax job, may generate TTI using the user information.

The user information may include at least one of a user's name, a telephone number, and a message.

The method may further include receiving a fax option relating to the fax job from the control point, wherein the generating the fax image may generate a fax image based on the received fax option.

The method may further include generating information on an event relating to a progress of the fax job; and transmitting the generated information to the control point.

According to another exemplary aspect, there is provided a method that a control point capable of being connected to an image forming apparatus transmits data by fax using a digital living network alliance (DLNA) methodology, the method including searching for an image forming apparatus capable of being connected to each other using a DLNA; receiving a selection of an image forming apparatus to execute a fax job from among the searched image forming apparatus; receiving a selection of content to be transmitted to the selected image forming apparatus; and transmitting the selected content to the selected image forming apparatus.

The method may further include storing at least one of a user's name, a telephone number, and a message as user information, wherein the transmitting may transmit the selected content and user information to the selected image forming apparatus.

The transmitting may include requesting the selected image forming apparatus to execute a fax job; receiving information regarding an address to which the content is transmitted in response to the request for executing the fax job; and transmitting the selected data based on the information regarding the address.

The requesting may incorporate the user information into the request for executing the fax job, and request the selected image forming apparatus to execute the fax job.

The method may further include receiving information regarding a progress of the fax job from the selected image forming apparatus; and displaying the received information.

The above and/or other aspects of the present invention will be more apparent by describing certain exemplary embodiments of the present invention with reference to the accompanying drawings, in which:
FIG. 1 is a block diagram illustrating a DLNA system according to an exemplary embodiment;
FIG. 2 is a view illustrating a method for transmitting and receiving data between a control point and an image forming apparatus using a DLNA;
FIGS. 3 and 4 are views provided to explain a method for transmitting data by fax according to an exemplary embodiment;
FIG. 5 is a view illustrating an example of data transmitted in operation 405 of FIG. 4;
FIG. 6 is a view illustrating an example of data transmitted in operation 410 of FIG. 4;
FIG. 7 is a view illustrating an example of data transmitted in operation 415 of FIG. 4;
FIG. 8 is a view illustrating options for transmitting data by fax according to an exemplary embodiment;
FIG. 9 is a view illustrating actions which are used when a fax job is executed using UPnP and variables for the actions according to an exemplary embodiment;
FIG. 10 is a view illustrating commands used for CancelJob of FIG. 9 according to an exemplary embodiment;
FIG. 11 is a view illustrating commands used for CreateFaxJob and CreateURIJob of FIG. 9 according to an exemplary embodiment;
FIG. 12 is a view illustrating commands used for GetFaxAttributes of FIG. 9 according to an exemplary embodiment;
FIG. 13 is a view illustrating events occurring according to an exemplary embodiment;
FIG. 14 is a view illustrating events used in FaxState of FIG. 13B according to an exemplary embodiment;
FIG. 15 is a view illustrating events used in JobEndState of FIG. 13B according to an exemplary embodiment;
FIG. 16 is a view illustrating a TTI generated according to an exemplary embodiment;
FIG. 17 is a view illustrating a fax image generated according to an exemplary embodiment;
FIG. 18 is a view illustrating the operation of transmitting data by fax according to an exemplary embodiment;
FIGS. 19A to 19I are views illustrating various UI windows displayed on a control point according to an exemplary embodiment;
FIG. 20 is a flowchart provided to explain a method that a control point transmits data by fax according to an exemplary embodiment; and
FIG. 21 is a flowchart provided to explain a method that an image forming apparatus transmits data by fax according to an exemplary embodiment.

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the embodiment can be carried out without those specifically defined matters. Also, well-known functions or constructions are not described in detail since they would obscure the invention with unnecessary detail.

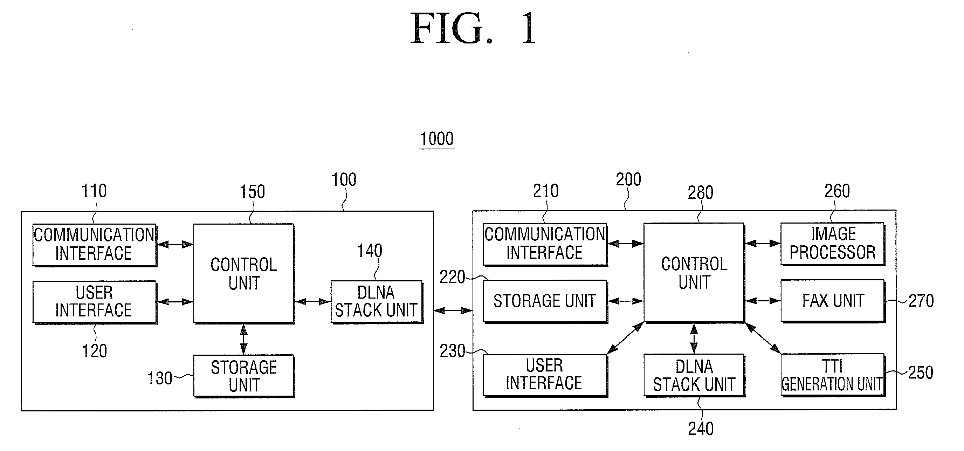

FIG. 1 is a block diagram illustrating a digital living network alliance (DLNA) system according to an exemplary embodiment.

Referring to FIG. 1, a DLNA system 1000 includes control point 100, and an image forming apparatus 200.

The control point 100 may be connected to at least one image forming apparatus based on a DLNA standard, and transmit content to the at least one image forming apparatus by fax using the connected image forming apparatus.

Herein, the control point 100 refers to a DLNA compliant device, such as a mobile phone, which may share its content with the other DLNA compliant devices on a DLNA network, connect to the image forming apparatus 200 on the DLNA network, and output content. For instance, the control point 100 may be one of a digital media server (DMS), a digital media player (DMP), and a digital media renderer (DMR) which are compliant with a DLNA guideline.

Herein, the DMS performs the function of a media server device (MSD) in an area of UPnP AV (Audio and Video), that is, the function of providing digital media content, and searching for the digital media content in the DMS so that a DLNA network user may display or divide content. For example, the DMS may include a video cassette recording (VCR) device, a compact disc (CD) player, a digital versatile disc (DVD) player, an MPEG layer 3 (MP3) player, a settop box (STB), a television (TV) tuner, a radio tuner, a personal computer (PC), and so on. However, it is not limited thereto.

The DMR which executes the selected media includes a TV, a stereo speaker, and so on. The DMP, which is a DMR including a UPnP control point (CP), performs the functions of a media renderer device (MRD) and a media render control point (MRCP). That is, the DMP selects media content and controls the selected media content to be executed.

The control point 100 may include a communication interface 110, a user interface 120, a storage unit 130, a DLNA stack unit 140, and a control unit 150.

The communication interface 110 is connected to a DLNA network, and shares content with the other DLNA devices on the DLNA network. To be specific, the communication interface 110 may communicate with the other DLNA devices on the DLNA network according to the UPnP protocol, and share content stored in the other DLNA devices.

Herein, the content may be image data, text data, HTML documents, or a file capable of direct printing on an image forming apparatus. The direct printing refers to the ability to perform a printing job only by transmitting a file to an image forming apparatus without additionally converting the file. The direct printing is supported on the files such as a JPG, PDF, XML paper specification (XPS), and so on.

The communication interface 110 may search for the at least one image forming apparatus 200 connected to the DLNA network. The searched image forming apparatus 200 may be displayed on the user interface 120.

Additionally, the communication interface 110 may transmit and receive data to and from the image forming apparatus 200. Specifically, the communication interface 110 may be connected to the image forming apparatus 200 according to various communication protocols, such as near field communication (NFC), Wi-Fi, and Bluetooth, and transmit a fax job and content generated by the control point 100 to the image forming apparatus 200 based on a DLNA standard.

The communication interface 110 may receive an event from the image forming apparatus 200 which carries out a fax job. The event may be displayed on the user interface 120.

Herein, the event includes an event which occurs on the image forming apparatus 200 with respect to a fax job, an event which occurs when the state of the image forming apparatus 200 changes, and so on. Examples of such an event include the event of failure in transmitting data by a fax data transmission function of the image forming apparatus 200 when the image forming apparatus 200, as not being connected to a telephone line, fails to transmit data, and the event of transmission completion when the image forming apparatus 200 successfully completes transmitting data by fax.

The user interface 120 includes a plurality of function keys using which a user sets or selects various functions supported by the control point 100, and displays various information provided by the control point 100. The user interface 120 may be implemented as a device, such as a touch pad, which is configured to support concurrent input and output, or a device combining functions of a mouse and a monitor. To this end, a user may select content and an image forming apparatus which will execute a fax job through a user interface window provided by the user interface 120. The user may input user information to be included in TTI information through when the image forming apparatus 200 transmits data by a fax unit 270 on the user interface window. A user may select various options for a fax job to be executed using the user interface window provided by the user interface 120.

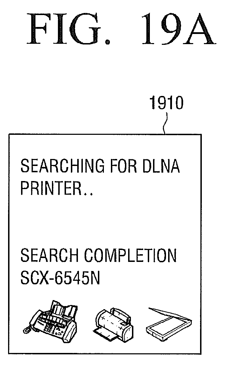

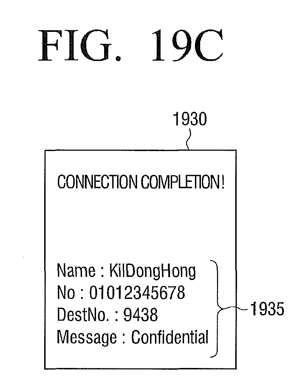

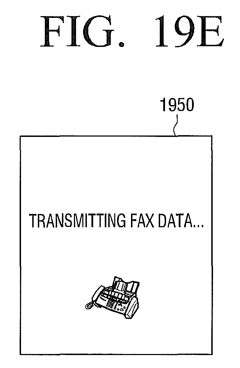

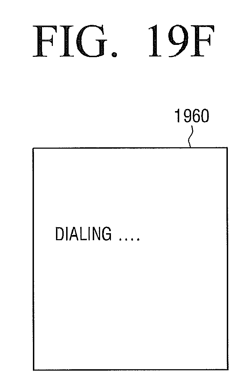

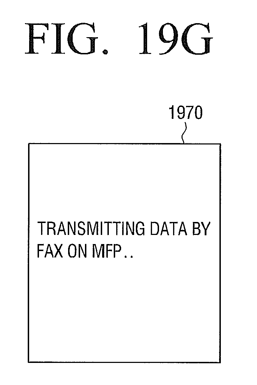

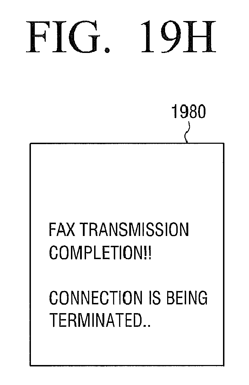

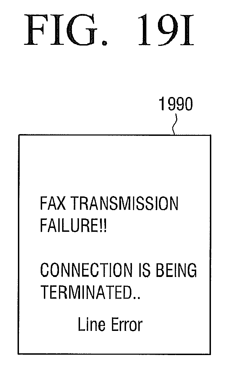

Additionally, if the user interface 120 is notified of an event from the image forming apparatus 200 which carries out a fax job, the user interface 120 may display the event to inform a user of the event. The UI window displayed on the user interface 120 will be explained later with reference to FIGS. 19A to 19I.

The storage unit 130 may store user information. To be specific, the storage unit 130 may store user information such as a user's name, contact information, a user message, or the like. Such information may be pre-stored, be obtained through the user interface 120 while executing a fax job, or be obtained by editing the pre-stored information. The storage unit 130 may be implemented as a storage medium in the control point 100 and/or an external storage medium, such as a removable disc including a universal serial bus (USB) memory, a storage medium connected to a host, or a web server over a wired or wireless network.

The DLNA stack unit 140 may control the communication interface 110 to communicate with the image forming apparatus 200 according to a DLNA standard. Specifically, if a user selects content and an image forming apparatus on which a fax job will be executed, the DLNA stack unit 140 may request the image forming apparatus 200 to execute the fax job. In this situation, the DLNA stack unit 140 may generate a command "CreateFaxJob" or "CreateURIJob" according to the location in which the selected content is stored.

Herein, the command "CreateFaxJob" requests the image forming apparatus 200 to execute a fax job if the selected content is stored in the storage unit 130 of the control point 100. Therefore, if the command "CreateFaxJob" is transmitted to the image forming apparatus 200, the image forming apparatus 200 may transmit to the control point 100 the address of the image forming apparatus 200 which will transmit fax data and the ID of the fax job in response to the command. Then, the DLNA stack unit 140 may control the communication interface 110 to transmit content corresponding to the fax job, that is the content selected by a user, to the image forming apparatus 200 having the received address.

If the selected content is stored in another DLNA device, the command "CreateURIJob" requests the image forming apparatus 200 to execute a fax job for content stored in another DLNA device. Therefore, if the command "CreateURIJob" is transmitted to the image forming apparatus 200, the image forming apparatus 200 may access to the address recorded in the command "CreateURIJob", that is the address in which the content is stored, and receive the content that a user desires to transmit by fax so as to transmit the content by fax. Meanwhile, the DLNA stack unit 140 may incorporate information regarding a user into the request for executing a fax job, and then requests the image forming apparatus 200 to execute the fax job. Specifically, the DLNA stack unit 140 may incorporate user information into the commands "CreateFaxJob" and "CreateURIJob", and then transmit the commands to the image forming apparatus 200.

If an option regarding a fax job is selected through the user interface 120, the DLNA stack unit 140 may incorporate the information as to the selected option into the fax job and then request the image forming apparatus 200 to execute the fax job. To be more specific, the DLNA stack unit 140 may incorporate information on the selected option into the commands "CreateFaxJob" and "CreateURIJob" which request the image forming apparatus 200 to execute a fax job, and then transmit the commands to the image forming apparatus 200. The DLNA stack unit 140 may incorporate user information and an option selected by a user into data for a fax job regarding content and then transmit the data. The DLNA stack unit 140 may generate data for a fax job regarding content selected by a user, and the data of the fax job may include fax option selected by the user. The data may be written in XHTML.

The control unit 150 controls elements in the control point 100. Specifically, the control unit 150 controls the communication interface 110 to search for image forming apparatuses which can be connected over a DLNA network, and causes information of the searched image forming apparatuses to be stored in the storage unit 130. The control unit 150 may receive information as to the function of the searched image forming apparatus from each image forming apparatus, and control the user interface 120 to display only the image forming apparatuses which can execute a fax job as a searched image forming apparatuses in response to the user's command for sending a fax data.

Additionally, the control unit 150 may control the DLNA stack unit 140 and the communication interface 110 to transmit the selected content or fax job to the image forming apparatus selected by a user. If the control unit 150 is notified of an event from the image forming apparatus which executes a fax job, the control unit 150 may control the user interface 120 to display the event.

As described above, the control point 100 transmits a fax job for content selected by a user to the image forming apparatus 200 using a DLNA, thereby making it easier to send a fax data.

The image forming apparatus 200, which can be connected to the control point 100, may receive content in response to the request for executing a scanning job received from the control point 100, and transmitted the content using a fax data transmission function of the image forming apparatus 200.

Herein, the image forming apparatus 200 refers to a device which transmits and receives data according to various communication protocols such as near field communication (NFC), Wi-Fi, and Bluetooth. However, it is not limited thereto. The image forming apparatus 200 according to the exemplary embodiment may be a fax machine or a MFP (multifunction peripheral) which integrates functions of a printer, a fax machine, and scanner in one device.

The image forming apparatus 200 may include a communication interface 210, a storage unit 220, a user interface 230, a DLNA stack unit 240, a TTI generation unit 250, an image processor 260, a fax unit 270, and a control unit 280.

The communication interface 210 may transmit and receive data such as fax job data and content to and from a control point over a DLNA network. To be more specific, the communication interface 210 may be connected to the control point 100 using various communication protocols such as near field communication (NFC), Wi-Fi, and Bluetooth. The communication interface 210 may receive content regarding a scanning job from other DLNA devices in addition to the control point 100.

The communication interface 210 may transmit information regarding the function of the image forming apparatus 200 to the control point 100 in response to the control point 100 which searches for the image forming apparatus 200.

The communication interface 210 may transmit to the control point 100 the event occurring on the image forming apparatus 200, for example the event regarding a fax job and the event regarding the state of the image forming apparatus 200.

The storage unit 220 may store received content, user information, and information regarding an option for a fax job. Specifically, the storage unit 220 may store content and user information regarding a fax job which is received through the communication interface 210, and information regarding an option for the fax job. The storage unit 230 may store preset TTI information (fax number of the image forming apparatus 200) and information on default fax option. The storage unit 220 may be implemented as an internal storage medium of the image forming apparatus 200 and/or an external storage medium such as a removable disc including a universal serial bus (USB) memory.

The user interface 230 includes a plurality of function keys using which a user sets or selects various functions supported by the image forming apparatus 200, and displays various information provided by the image forming apparatus 200. The user interface 230 may be implemented as a device, such as a touch pad, which is configured to support concurrent input and output, or a device combining functions of a mouse and a monitor. A user may set default TTI information and default fax option on a UI window provided by the user interface 230. The default TTI information is the information such as the telephone number of the image forming apparatus 200 which is used when user information is not received from the control point 100, and the default fax option is the option applied to a received fax job when any fax option is not received from the control point 100.

The DLNA stack unit 240 may control the communication interface 210 to communicate with the control point 100 on a DLNA network according to a DLNA standard.

If the DLNA stack unit 240 receives the request for executing a fax job from the control point 100, the DLNA stack unit 240 may control the communication interface 210 to transmit to the control point 100 information regarding an address to which content corresponding to the fax job is transmitted. Specifically, if the DLNA stack unit 240 receives the command "CreateFaxJob" from the control point 100, the DLNA stack unit 240 may control the communication interface 210 to transmit the ID of the fax job and the destination address of the content to the control point 100.

If the DLNA stack unit 140 receives the request for executing the fax job which includes the address for storing content, the DLNA stack unit 140 may control the communication interface 210 to receive the content (fax job data) corresponding to the fax job from the address for storing content. In more detail, if the DLNA stack unit 140 receives the command "CreateURIJob" from the control point 100, the DLNA stack unit 240 may control the communication interface 210 so that the communication interface 210 accesses to the address included in the command "CreateURIJob" to receive the content.

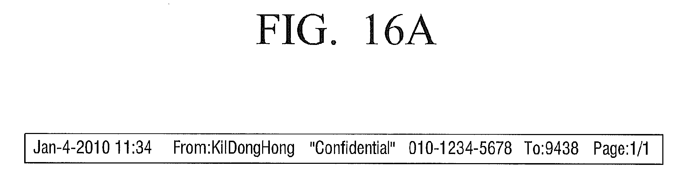

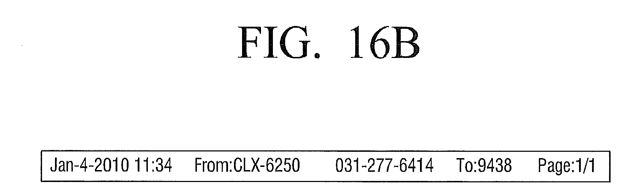

The TTI generation unit 250 may generate transmit terminal identification (TTI) corresponding to a fax job. To be specific, if the TTI generation unit 250 receives user information from the control point 100, the TTI generation unit 250 may generate TTI based on the user information. For instance, the TTI generation unit 250 may generate TTI as illustrated in FIG. 16A. If the TTI generation unit 250 does not receive user information from the control point 100, the TTI generation unit 250 may generate TTI as illustrated in FIG. 16B using the default information for TTI stored in the storage unit 230. Meanwhile, the TTI generation unit 250 may generate TTI using both the user information received from the control point 100 and the TTI information pre-stored in the image forming apparatus 200.

The image processor 260 may process the generated TTI and the received content to become fax data. Specifically, the image processor 260 may combine the TTI generated by the TTI generation unit 250 with the content received through the communication interface 210, and convert the content having the TTI into an image which is compliant with a fax transmission protocol of T.30 protocol. If the image processor 260 receives a fax option from the control point 100, the image processor 260 may convert the content having the TTI into a fax image based on the received fax option. On the other hand, if the image processor 260 does not receive a fax option from the control point 100, the image processor 260 may convert the content having the TTI into a fax image based on the pre-set default fax option.

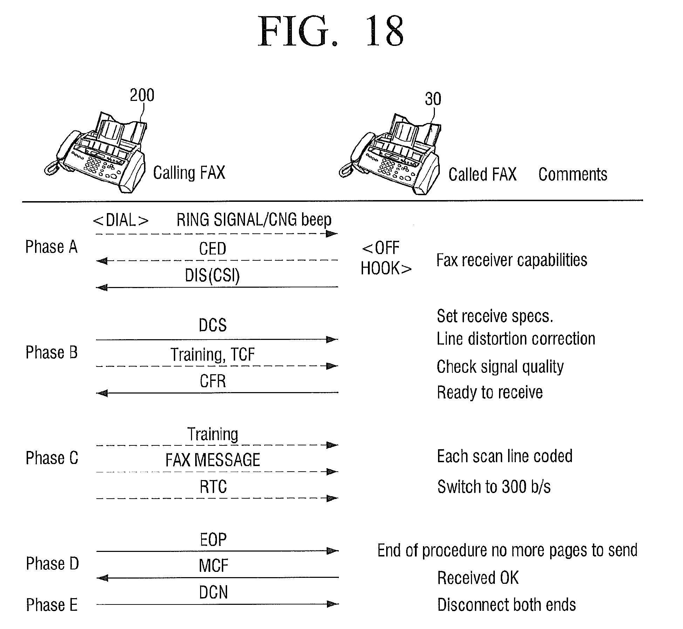

The fax unit 270 transmits a generated fax image. The operation that the fax unit 270 transmits data will be explained in detail with reference to FIG. 18.

The fax unit 270 generates information on an event regarding a fax job, and controls the DLAN stack unit 240 and the communication interface 210 to transmit the generated event information. Specifically, if an event such as completion in transmitting a fax job or errors on a fax job occurs, the fax unit 270 may control the DLNA stack unit 240 and the communication interface 210 to transmit the event to the control point 100.

The control unit 280 controls elements in the image forming apparatus 200. In more detail, if the control unit 280 receives a request for executing a fax job through the communication interface 210, the control unit 280 may control the communication interface 210 to receive content corresponding to the requested fax job from the control point 100 or another DLNA device.

The control unit 280 may control the TTI generation 250 to generate TTI corresponding to the received fax job, and control the image processor 260 to convert the generated TTI and the received content into a fax image suitable for being transmitted by using a fax transmission function of the image forming apparatus 200. The control unit 280 may control the fax unit 270 to transmit the fax image.

The control unit 280 generates an event for the image forming apparatus 200, and causes the generated event to be transmitted to the control point 100. To be specific, the control unit 280 generates the event which relates to the error or operation of the image forming apparatus 200, and controls the DLNA stack unit 240 and the communication interface 210 to transmit the generated event to the control point 100. In addition, if the control unit 280 receives an inquiry about the progress of a fax job from the control point 100, the control unit 280 may check the progress of the current fax job and then transmit the checked progress to the control point 100.

As described above, the image forming apparatus 200, according to the exemplary embodiment, may transmit content received from the control point 100 using a fax data transmission function of the image forming apparatus 200, thereby enhancing a user's convenience. Since the image forming apparatus 200 according to the exemplary embodiment generates TTI to reflect the user information received from the control point 100, and thus a recipient may conveniently know the transmitter of the content.

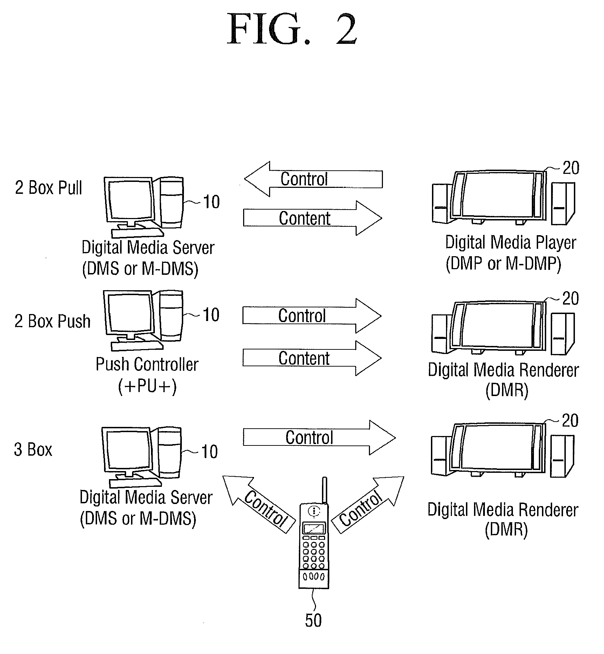

FIG. 2 is a view illustrating a method for transmitting and receiving data between a control point 100 and an image forming apparatus 200 using a DLNA protocol.

FIG. 2 shows three different types of transmitting data according to a DLNA protocol.

In a 2 Box Pull model, the second DLNA device 20 requests the first DLNA device 10 to transmit content, and the first DLNA device 10 transmits the content to the second DLNA device 20 in response to the request.

In a 2 Box Push model, the first DLNA device 10 notifies the second DLNA device 20 that the first DLNA device 10 is to transmit content, and the first DLNA device 10 transmits the content to the second DLNA device 20. Such a 2 Box Push model is used in this exemplary embodiment. The above described operation of requesting an execution of a fax job corresponds to the operation that the first DLNA device 10 notifies the second DLNA device 20 of the transmission of content, and the operation of transmitting content to the image forming apparatus 200 corresponds to the operation of transmitting content from the first DLNA device 10 to the second DLNA device 20.

In a 3 Box model, the third DLNA device 50 causes content stored in the first DLNA device 10 to be transmitted to the second DLNA device 20. Such a 3 Box model is also used in this exemplary embodiment. If the operation of requesting an execution of a fax job corresponds to the operation that the third DLNA device 50 notifies the second DLNA device 20 of the transmission of content, the operation that the image forming apparatus 200 receives content from another DLNA device may correspond to the operation that the first DLNA device 10 notifies the second DLNA device 20 of the transmission of content.

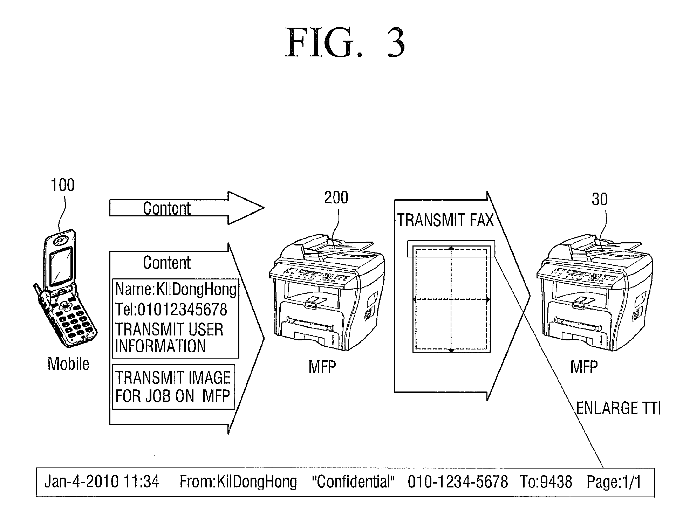

FIG. 3 is a view provided to explain a method for transmitting data by an image forming apparatus 200 according to an exemplary embodiment.

Referring to FIG. 3, as described above with reference to FIG. 2, information such as content to be faxed, and the user name and contact information are transmitted to the image forming apparatus 200 using the 2 Box Push model. The image forming apparatus 200 generates a fax image using the received content and user information, and transmits the fax image to another image forming apparatus 30.

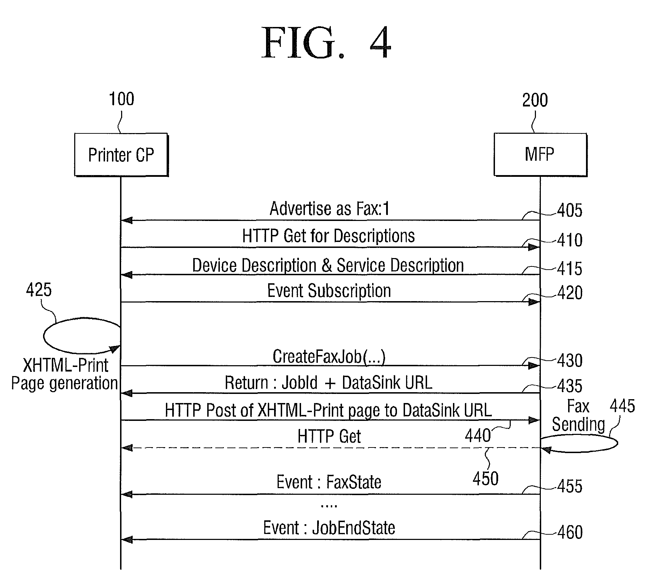

FIG. 4 shows a protocol stack between the control point 100 and the image forming apparatus 200.

Referring to FIG. 4, the protocol is similar to a DLNA print protocol according to a DLNA standard.

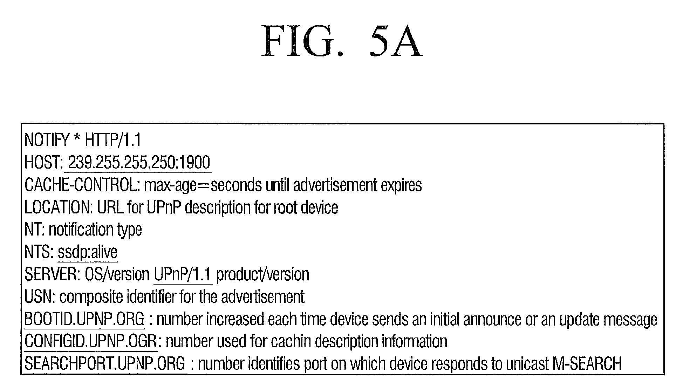

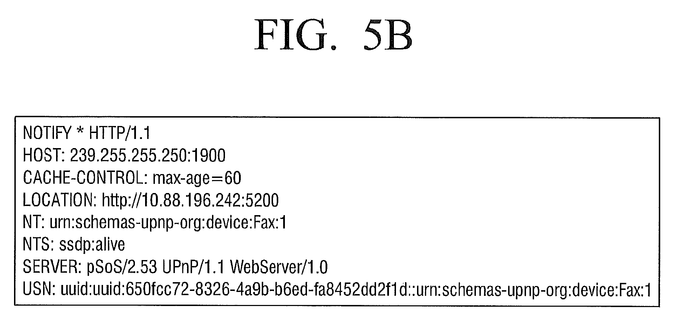

Specifically, the control point 100 searches for the image forming apparatus 200 which can be connected over a DLNA network (405). This search operation is the first operation of a UPnP network, and may be performed using a simple service discovery protocol (SSDP). A guideline for the SSDP is shown in FIG. 5A. The image forming apparatus 200 according to the exemplary embodiment transmits data to the control point 100 as shown in FIG. 5B so as to notify the control point 100 that the image forming apparatus 200 itself is a DLNA device (405).

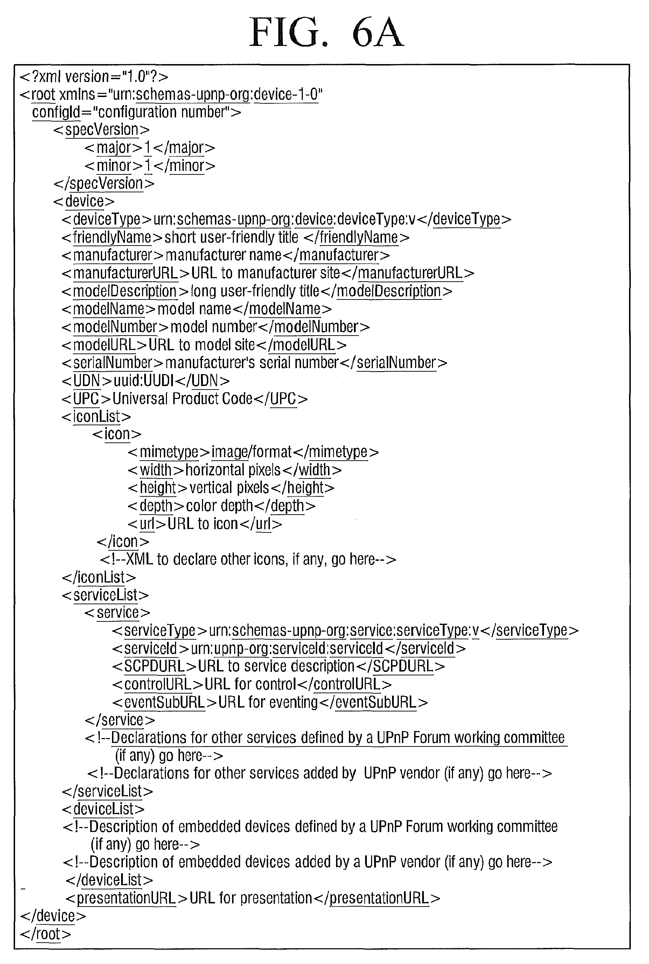

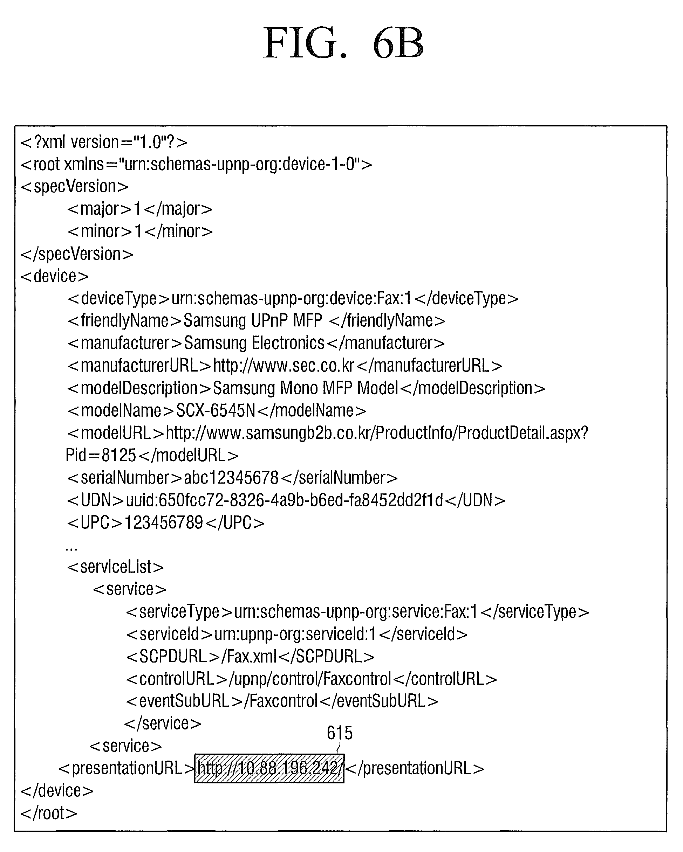

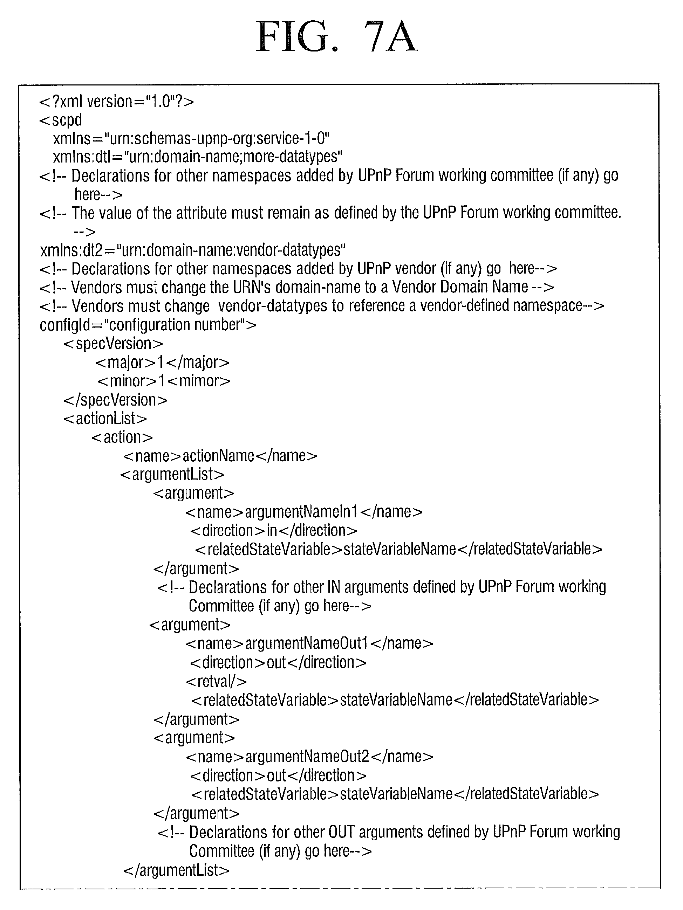

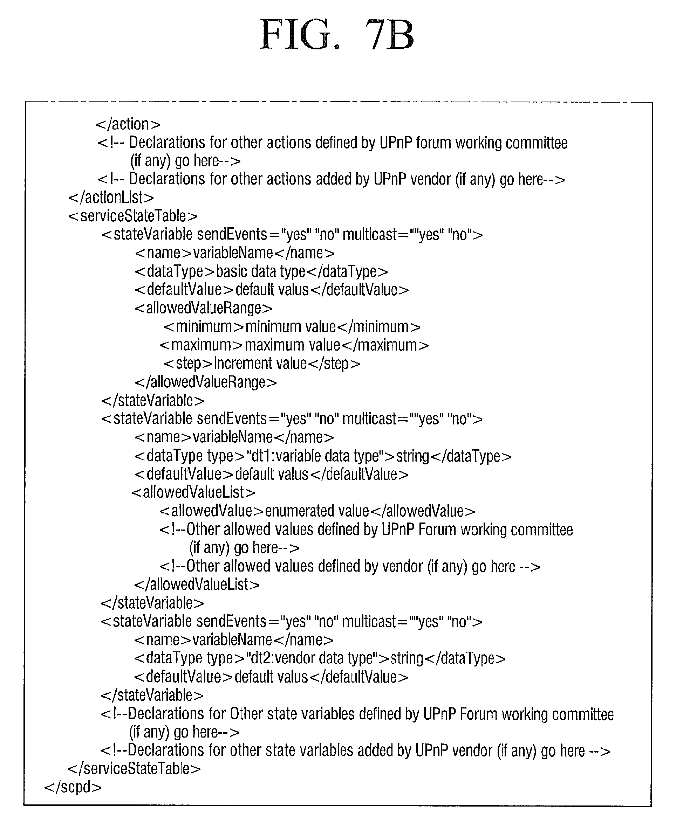

If the control point 100 finds the image forming apparatus 200 which will execute a fax job, the control point 100 may receive a device description and a service description from the found image forming apparatus 200 (410, 415). Herein, the description is a detailed explanation about a device. FIG. 6A illustrates a guideline regarding a device description in a UPnP, and FIGS. 7A and 7B illustrate a guideline regarding a service description in a UPnP. The image forming apparatus 200 according to the exemplary embodiment may provide the control point 100 with the description as illustrated in FIG. 6B.

The control point 100 may transmit "Event Subscription" to the image forming apparatus 200 (420), and generate "XHTML-Print page" regarding a fax job (425). That is, the control point 100 may generate data of a fax job. An option for the fax job may be set on the generated fax job data, and content may not be included in the generated fax job data.

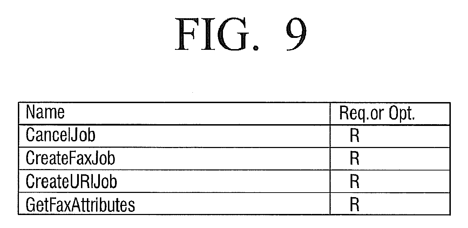

The control point 100 requests the image forming apparatus 200 to execute a fax job (430). The command which is used to request an execution of a fax job is illustrated in FIGS. 9 to 12.

The image forming apparatus 200 may transmit an ID of the fax job and information (DataSink URL) on an address to which fax data is transmitted to the control point 100 in response to the request for the execution of the fax job (435). The control point 100 may transmit the data of the fax job and content to the image forming apparatus 200 having the address included in the information (440).

If content is stored in another DLNA device, the image forming apparatus 200 may access the address so as to receive the content (445, 450). Herein, the address may include data for a fax job or the request for an execution of a fax job.

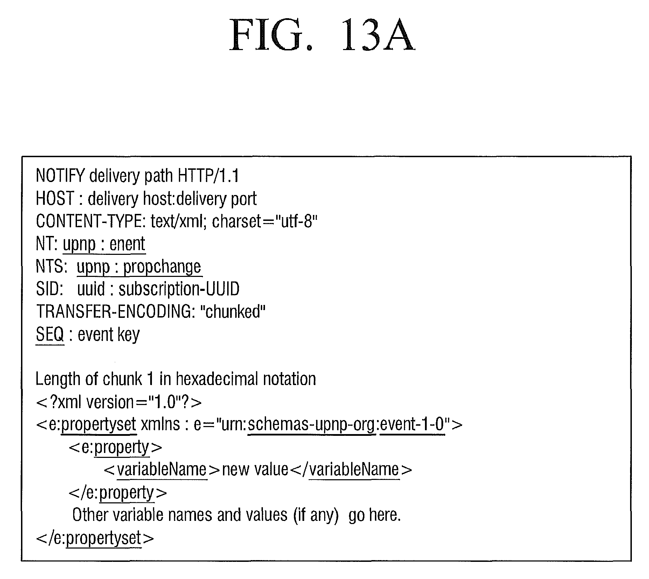

If an event regarding a fax job occurs, or a fax transmission is completed, the image forming apparatus 200 may notify the control point 100 of the event occurrence or the completion of the fax transmission. FIG. 13A illustrates an example of information regarding the event that the image forming apparatus 200 transmits.

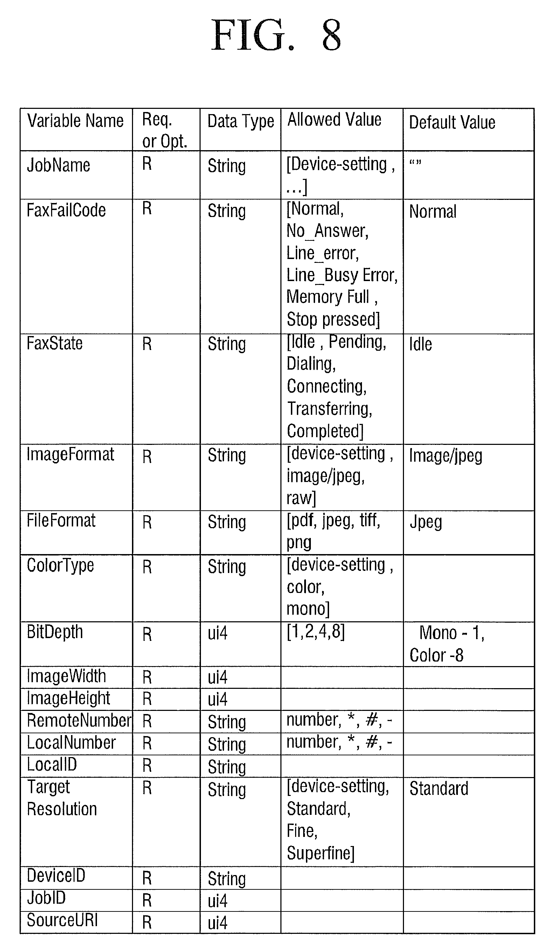

FIG. 8 shows an example of variables which are used to transmit data by using a fax data transmission function of the image forming apparatus 200 according to an exemplary embodiment.

The "JobName" is a variable name which is used to easily identify a fax job transmitted from the control point 100. The "FaxFailCode" is a variable name which provides reasons for completion, errors, of cancellation of a fax job. The "FaxFailCode" includes "Normal" which represents that a fax job is normally completed, "No_Answer" which represents that a fax job is terminated by time out since a recipient does not answer, "Line_error" which represents that a fax job is aborted due to a bad line condition, "Line_Busy Error" which represents that a fax job is aborted since the line is busy, "Memory Full" which represents that a current fax machine can not receive data from a control point since a memory is full, and "Stop pressed" which represents that a control point cancels a fax job through CancelJob Action or that an MFP cancels a fax job.

The "FaxState" represents the current state of a fax job. The "FaxState" includes "Idle" (normal state, available for a fax job), "Pending" (waiting for fax transmission), "Dialing" (dialing a number input by a user), "Connecting" (state between dialing and transferring data), "Transferring" (transferring data by fax), and "Completed" (completing data transmission by fax).

The variable name "Image Format" represents a format of content (image data). The variable name "File Format" represents a file format. The variable name "Color Type" represents an option regarding whether to transmit data in a color mode or in a mono mode.

The variable name "Bit Depth" represents the number of bits of image data. Bit Depth of a mono image may be 1, 2, or 4, and bit depth of a color image may be 8. The variable name "Image Width" represents the number of pixels on width of an image, and the variable name "Image Height" represents the number of pixels on height of an image.

The "Remote Number" represents a fax number of a recipient, and the "Local Number" represents the number of the image forming apparatus.

The "Local ID" represents control point ID or a user's name, and the "TargetResolution" represents a method for processing an image transmitted to the control point. The "Device ID" represents an explanation for each device ID, the "Job ID" designates JobID when the control point 100 successfully executes "CreateFaxJob", and the "Source URI" specifies URI to store data.

FIG. 9 shows actions and variables used when a fax job is executed using a UPnP.

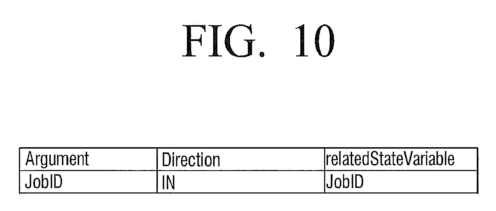

Specifically, the command "CancelJob" is used when a generated job is completed or cancelled. FIG. 10 shows detailed items for the command "CancelJob".

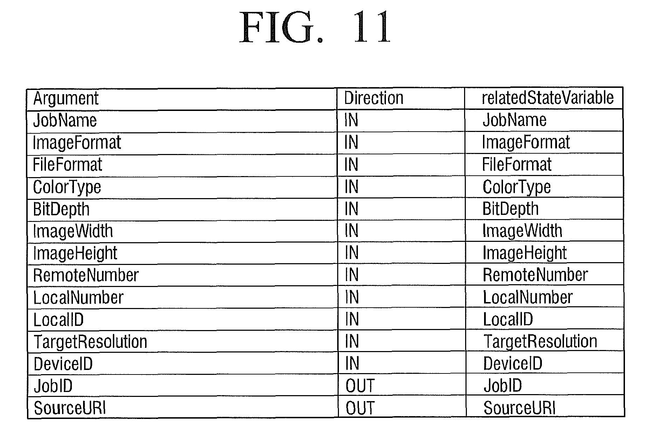

The "CreateFaxJob" is a command which is used to generate a fax job. The command "Create URIJob" is also used to generate a fax job, but the command "Create URIJob" is distinct from the command "CreateFaxJob" in that the control point does not push data, but the image forming apparatus pulls data. FIG. 11 illustrates detailed items used for the commands "CreateFaxJob" and "CreateURIJob".

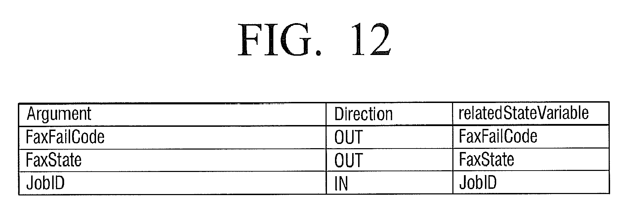

The command "GetFaxAttributes" is used when the control point desires to know the progress of a fax job. FIG. 12 illustrates detailed items used for the command "GetFaxAttributes".

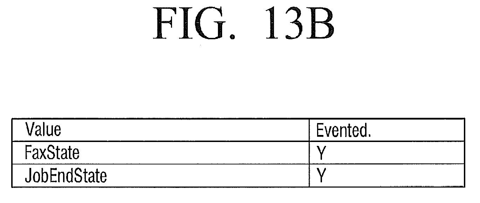

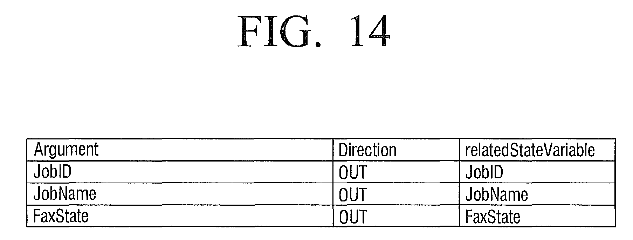

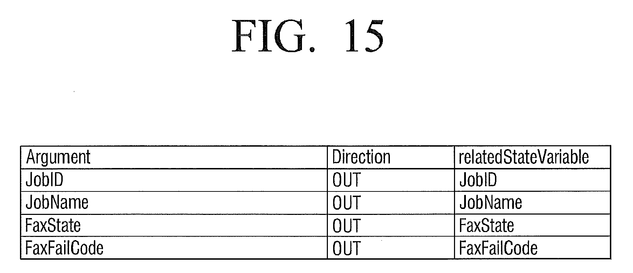

FIG. 13A illustrates an example of event data that the image forming apparatus 200 transmits to the control point 100 in response to the event occurring on the image forming apparatus 200. Specifically, the event capable of occurring on the image forming apparatus 200 may be the event "FaxState" relating to the state of the image forming apparatus 200 and the event "JobEndState" relating to the state of a fax job as shown in FIG. 13B. The command used when the event "FaxState" relating to the state of the image forming apparatus 200 is transmitted to the control point is illustrated in FIG. 14, and the command used when the event "JobEndState" relating to the state of a fax job is transmitted to the control point is illustrated in FIG. 15.

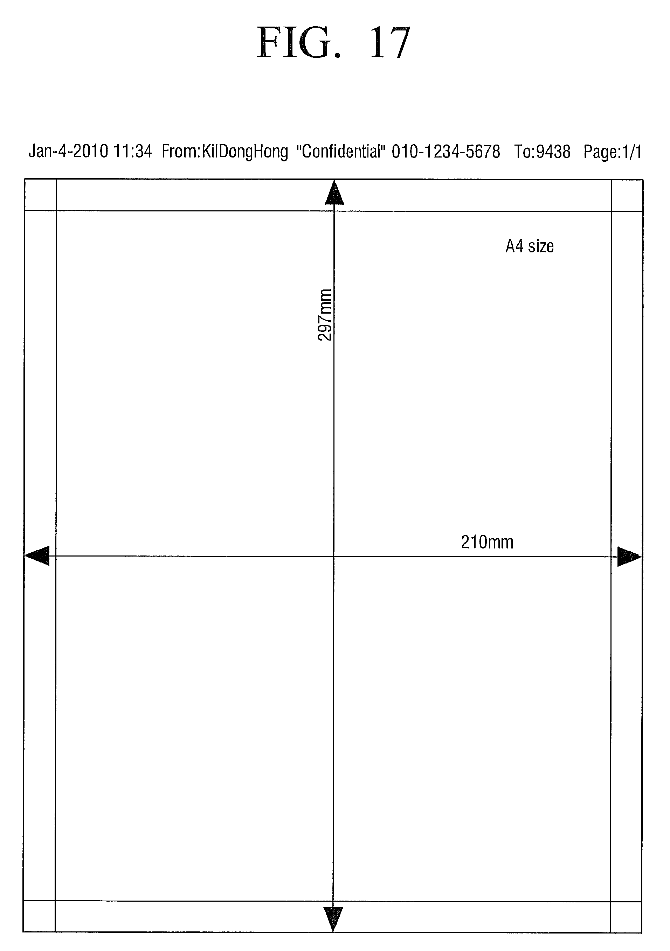

FIG. 17 is a view illustrating a fax image generated according to an exemplary embodiment.

Referring to FIG. 17, the TTI generated by the TTI generation unit 250 is transmitted to another image forming apparatus while being positioned on an upper portion of fax data.

FIG. 18 is a view illustrating the operation of transmitting data by fax according to an exemplary embodiment.

Referring to FIG. 18, the transmitter 200 recognizes the capability of the recipient 300 such as a transmission speed, a compression method, and a definition, and then converts a fax image into an image which is proper for the capability of the recipient 300.

If an image is completely transmitted, the transmitter transmits the command end of page (EOP) in order to notify the recipient of the completion of image transmission, and the recipient 300 transmits the command message confirm (MCF) to the transmitter in order to notify the transmitter of the completion of image reception. Then, the operation of transmitting data by fax is completed by transmitting a disconnect (DCN) command.

FIGS. 19A to 19I are views illustrating various UI windows displayed on a control point according to an exemplary embodiment.

Referring to FIG. 19A, a UI window 1910 is illustrated, on which the image forming apparatus 200 which can be connected to the control point is searched, and the searched image forming apparatuses are displayed.

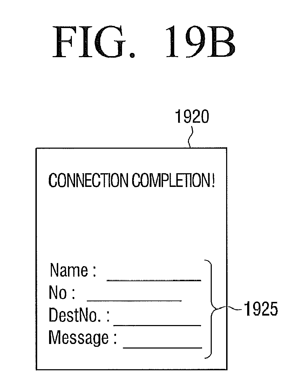

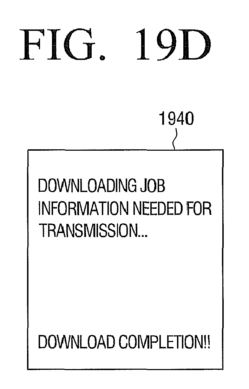

FIG. 19B illustrates a UI window 1920 which displays information regarding available image forming apparatuses selected by a user. The user may input user information through a region 1925 of the UI window 1920 (1930) of FIG. 19d. The operation of inputting user information may be preset or performed whenever a fax data is transmitted.

FIGS. 19D to 19I illustrates UI windows 1940, 1950, 1960, 1970, 1980, 1990 which display the process of transmitting data.

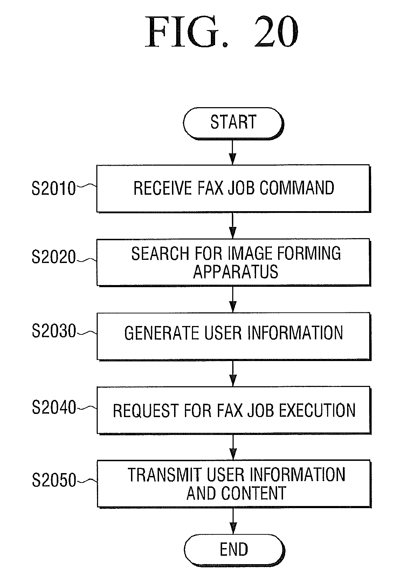

FIG. 20 is a flowchart provided to explain a method that an image forming apparatus transmits data using a fax data transmission function of the image forming apparatus according to an exemplary embodiment.

Referring to FIG. 20, if a fax job command is received from a user (S2010), the control point 100 may search for an image forming apparatus 200 which is capable of being connected over a DLNA network using a DLNA (S2020).

User information may be generated (S2030). In more detail, user information such as a user's name, contact information, a user message, or the like may be input by a user on a user interface window. Such information may be generated previously.

The image forming apparatus 200 may be requested to execute a fax job (S2040). In this situation, user information is included in the request, and then the request having the user information may be transmitted to the image forming apparatus 200.

Content may be transmitted to the image forming apparatus 200 (S2050). The operation of transmitting user information and content has been explained above with reference to FIGS. 1 and 4, and thus detailed description will be omitted.

In a method that a control point transmits data according to the exemplary embodiment, a fax job for content selected by a DLNA user is transmitted to the image forming apparatus 200. Therefore, data is easily transmitted by a fax unit 270. The method for transmitting data as shown in FIG. 20 may be executed on the control point 100 having the structure of FIG. 1 and also on the other control points.

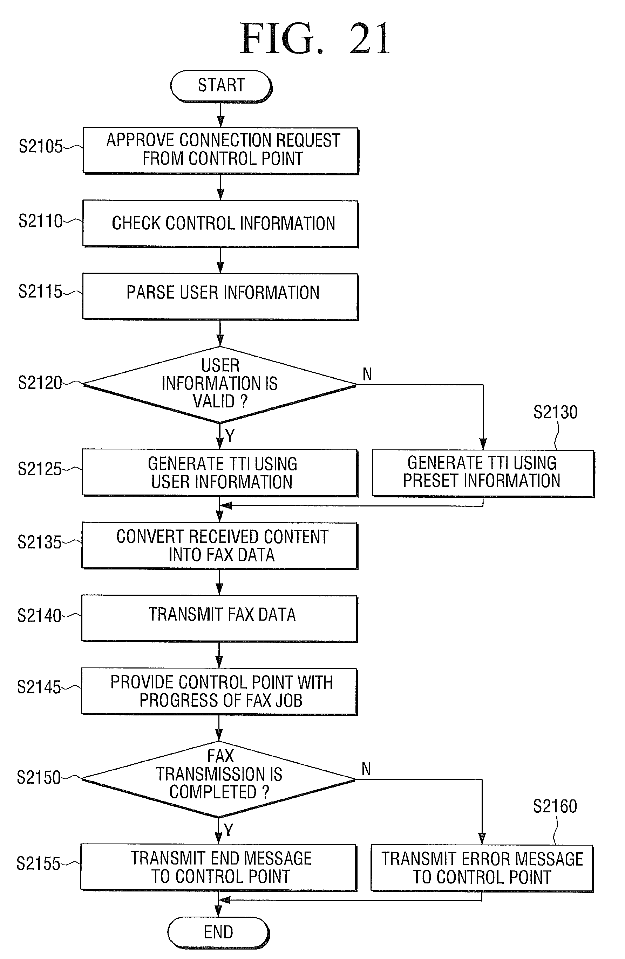

FIG. 21 is a flowchart provided to explain a method that an image forming apparatus transmits data using a fax data transmission function of the image forming apparatus according to an exemplary embodiment.

If a connection request is received from the control point, the image forming apparatus 200 approves the request (S2105). Then, the image forming apparatus checks information regarding the connected control point (S2110), and receives user information from the control point 100 (S2115). Such an operation may be performed in response to the request for executing a fax job by the control point 100.

Whether the received user information is valid is checked (S2120). If the information is valid, TTI is generated using the user information (S2125), and if the user information is invalid, TTI is generated using preset information regarding TTI (S2130).

Content is received from the control point, and then the received content may be converted into fax data (S2135). Specifically, the generated TTI is combined with the received content, and the content having the TTI is converted into fax data based on the fax option. The converted fax data may be transmitted to another image forming apparatus 200 by a fax unit 270 (S2140).

If the control point requests the image forming apparatus to provide information regarding the progress of a fax job, the image forming apparatus 200 may transmit the information (S2150), and if data transmission using a fax function of the image forming apparatus 200 is completed, the image forming apparatus may transmit an event of completion in transmitting data to the control point (S2155). On the other hand, if data transmission is failed, the image forming apparatus may transmit an event of failure in transmitting data to the control point (S2160).

A method that an image forming apparatus transmits 200 data by a fax unit 270 in the image forming apparatus according to the exemplary embodiment can transmit content received from a control point, and thus user's convenience is improved. Since TTI is generated to reflect user information received from a control point, a recipient may easily recognize a transmitter. The method for transmitting data as illustrated in FIG. 21 may be carried out on the image forming apparatus 200 having the structure of FIG. 1 or on the other image forming apparatuses.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. An image forming apparatus which is capable of being connected to a control point using a digital living network alliance (DLNA) methodology, the image forming apparatus comprising:
a communication interface which is requested by a connectable control point to execute a fax job, and receives content corresponding to the fax job;
a TTI generation unit which generates a terminal identification (TTI) corresponding to the fax job;
an image processor which generates a fax image (or data) using the generated TTI and the received content; and
a fax unit which transmits the generated fax image (or data).

2. The image forming apparatus as claimed in claim 1, further comprising:
a DLNA stack unit which, if the control point requests the DLNA stack unit to execute a fax job, transmits information regarding an address to which the content corresponding to the fax job is transmitted to the control point.

3. The image forming apparatus as claimed in claim 2, wherein the DLNA stack unit, if the address having the content is included in the request for executing the fax job, controls the communication interface to receive the content corresponding to the fax job from the address having the content.

4. The image forming apparatus as claimed in claims 1 to 3, wherein the TTI generation unit, if information regarding a user is included in the request for executing the fax job, generates TTI using the user information.

5. The image forming apparatus as claimed in claim 4, wherein the user information comprises at least one of a user's name, a telephone number, and a message.

6. The image forming apparatus as claimed in claims 1 to 5, wherein the communication interface receives a fax option relating to the fax job from the control point, and the image processing unit generates a fax image (or data) based on the received fax option.

7. The image forming apparatus as claimed in claims 1 to 6, wherein the fax unit generates information on an event relating to a progress of a fax job, and the communication interface transmits the generated information to the control point.

8. A control point which is capable of being connected to an image forming apparatus using a digital living network alliance (DLNA) methodology, the control point comprising:
a communication interface which searches for an image forming apparatus capable of being connected to each other using a DLNA;
a user interface which receives a selection of an image forming apparatus to execute a fax job from among the searched image forming apparatus and a selection of content to be transmitted to the selected image forming apparatus; and
a DLNA stack unit which control the communication interface to transmit the selected content to the selected image forming apparatus.

9. The control point as claimed in claim 8, further comprising:
a storage unit which stores at least one of a user's name, a telephone number, and a message as user information,
wherein the DLNA stack unit transmits the selected content and user information to the selected image forming apparatus.

10. The control point as claimed in claims 8 or 9, wherein the DLNA stack unit controls the communication interface to request the selected image forming apparatus to execute a fax job, and if information regarding an address to which the content is transmitted in response to the request for executing the fax job is received, transmits the selected data based on the information regarding the address.

11. The control point as claimed in claim 10, wherein the DLNA stack unit incorporates the user information into the request for executing the fax job, and requests the selected image forming apparatus to execute the fax job.

12. The control point as claimed in claim 8 to 11, wherein the communication interface receives information regarding a progress of the fax job from the selected image forming apparatus, and the user interface displays the received information.

13. A method that an image forming apparatus capable of being connected to a control point transmits data by a fax unit of the image forming apparatus using a digital living network alliance (DLNA) methodology, the method comprising:
receiving a request for executing a fax job from a connectable control point;
receiving content corresponding to the fax job;
generating a transmit terminal identification (TTI) corresponding to the fax job;
generating a fax image using the generated TTI and the received content; and
transmitting the generated fax data by the fax unit.

14. A method that a control point capable of being connected to an image forming apparatus transmits data by using a fax transmission function of the image forming apparatus using a digital living network alliance (DLNA) methodology, the method comprising:
searching for an image forming apparatus capable of being connected to each other using a DLNA;
receiving a selection of an image forming apparatus to execute a fax job from among the searched image forming apparatus;
receiving a selection of content to be transmitted to the selected image forming apparatus; and
transmitting the selected content to the selected image forming apparatus.
